# EUROPEAN PATENT SPECIFICATION

(11) **EP 4 671 721 B1**
(45) Date of publication and mention of the grant of the patent: **09.09.2026**
(21) Application number: 25185428.7
(22) Date of filing: 26.06.2025
(51) Int. Cl.: G01M 7/00, F04D 27/00, G01H 1/00, G01M 13/00, G01P 15/00, G05B 19/042

(54) **SYSTEM FOR MONITORING A ROTATING DEVICE**
SYSTEM ZUR ÜBERWACHUNG EINER DREHVORRICHTUNG
SYSTÈME DE SURVEILLANCE D'UN DISPOSITIF ROTATIF

(30) Priority: 27.06.2024 TW 113124057
(43) Date of publication of application: 31.12.2025
(73) Proprietor: Yen Sun Technology Corp., Kaohsiung City 81449 (TW)
(72) Inventor: CHEN, Graham, 81449 Renwu Dist., Kaohsiung City, Taiwan (TW); LIU, Hsien-Wen, 804 Gushan Dist., Kaohsiung City, Taiwan (TW); TSAI, Tzu-Wen, 81157 Nanzih Dist., Kaohsiung City, Taiwan (TW); WU, Chien-Wei, 807035 Sanmin Dist., Kaohsiung City, Taiwan (TW)
(74) Representative: Zimmermann, Tankred Klaus

(56) References cited:
- CN-U- 201 615 519
- CN-U- 206 988 158
- US-A1- 2006 145 881
- US-A1- 2015 211 581

## Description

The disclosure relates to a monitoring system, and more particularly to a system for monitoring a rotating device.

A conventional way of continuously monitoring operation and evaluating service life of, and detecting abnormalities in real time in a rotating device such as a cooling fan is to mount an accelerometer on its shaft or bearing to measure acceleration of the shaft or the bearing. The measured values of the acceleration of the shaft or the bearing can not only be used to calculate some monitoring parameters (e.g., change of speed, a degree of vibration, etc.), but can also be used in combination with a reference kurtosis to further confirm performance changes of the rotating device. In addition, if thresholds are set respectively for the monitoring parameters including the acceleration based on empirical analysis and/or experimental data, when a specific one of the monitoring parameters exceeds the corresponding threshold, conditions such as bearing wear, abnormal rotations of the shaft, etc., that require immediate maintenance or replacement of parts of the rotating device can be instantly known so that maintenance personnel may respond immediately to ensure that the rotating device can continue to operate normally.

However, an accelerometer mounted on the shaft or the bearing may not be able to accurately measure acceleration since weight of components mounted on the shaft or the bearing must be considered in manufacturing the rotating device to balance the rotating device. Not only does this create more difficulties in balancing the rotating device, but when the shaft or the bearing is worn and eccentrically rotated, detecting abnormal conditions (e.g., abnormal vibration) would be difficult due to the balance of the rotating device.. Moreover, there are many abnormal conditions that cannot be detected by only the parameters measurable by an accelerometer. Therefore, the conventional way of continuously monitoring operation of a rotating device is suboptimal.

CN 06 988 158 U discloses a real-time fan state monitoring system which includes a control control module, a dynamic parameter acquisition module, a vibration state detection module, a communication module, an alarm module, a power supply module, a storage module, and an electrical parameter acquisition module.

Therefore, an object of the disclosure is to provide a system for monitoring a rotating device that can alleviate at least one of the drawbacks of the prior art.

According to an aspect of the disclosure, there is provided a system for monitoring a rotating device according to claim 1.

Other features and advantages of the disclosure will become apparent in the following detailed description of the embodiment(s) with reference to the accompanying drawings. It is noted that various features may not be drawn to scale.
Figure 1 is a schematic diagram illustrating a system for monitoring a rotating device according to an embodiment of this disclosure.
Figure 2 is a sectional view of a rotating device to be monitored by the system according to an embodiment of this disclosure.
Figure 3 is a block diagram illustrating the system according to an embodiment of this disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

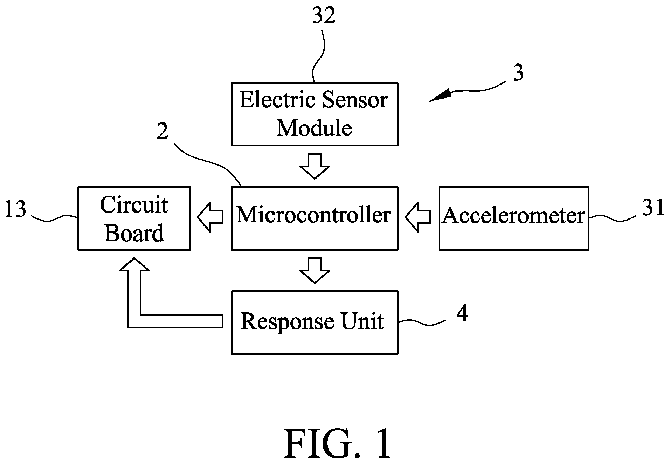

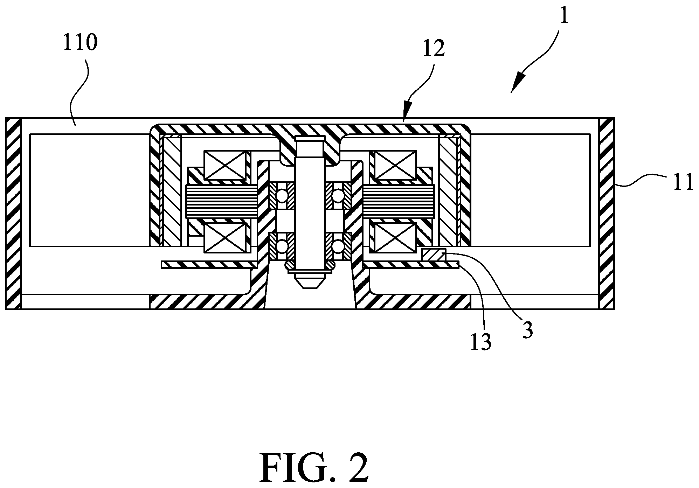

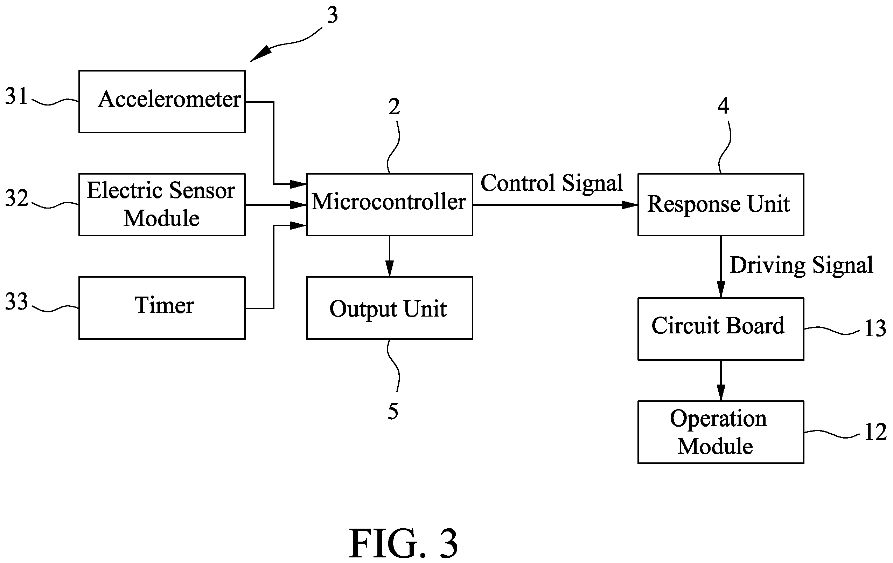

Referring to Figures 1 to 3, an embodiment of a system for monitoring a rotating device 1 according to the disclosure is provided. For example, the rotating device 1 is a cooling fan as shown in Figure 2. The rotating device 1 includes a housing 11 that surrounds and defines an accommodation space 110, an operation module 12 that is disposed in the accommodation space 110, and a circuit board 13 that is electrically connected to the operation module 12 to drive operation of the operation module 12. For example, the operation module 12 may be a motor, and the circuit board 13 may be mounted on a stator of the motor for controlling the coil to generate a magnetic field so as to drive rotation of the motor. It should be noted that although the rotating device 1 is described as a cooling fan in this embodiment, in other embodiments, the rotating device 1 may also be other components that use rotation as its main operating mechanism. The system includes a sensing unit 3 adapted to be disposed on the circuit board 13, a microcontroller 2 electrically connected to the sensing unit 3, and a response unit 4 electrically connected to the microcontroller 2 and adapted to be electrically connected to the circuit board 13. In some embodiments, the microcontroller 2 is adapted to be disposed on the circuit board 13. In some embodiments, the system further includes an output unit 5 electrically connected to the microcontroller 2.

The sensing unit 3 includes an accelerometer 31 that is configured to measure movement of the circuit board 13 and to generate first detection data related to the movement of the circuit board 13, an electric sensor module 32 that is configured to measure electrical properties of the circuit board 13 and to generate second detection data related to the electrical properties of the circuit board 13, and a timer 33 that is configured to measure time and to generate timing data. Specifically, the accelerometer 31 is configured to measure acceleration of the circuit board 13, and the first detection data generated by the accelerometer 31 includes an acceleration value of the circuit board 13. The electric sensor module 32 may include a voltmeter, an ammeter, a resistance meter and a power meter, but the disclosure is not limited thereto. The second detection data generated by the electric sensor module 32 includes a voltage value, a current value, a resistance value and an electric power value. The accelerometer 31, the electric sensor module 32 and the timer 33 are configured to respectively transmit the first detection data, the second detection data and the timing data to the microcontroller 2.

The microcontroller 2 is configured to serve as a control center of the system of this embodiment. The microcontroller 2 includes a processing chip (e.g., a central processing unit) that can be pre-installed with a logic program for calculating and processing data, and to generate a control signal accordingly. Specifically, the microcontroller 2 is configured to calculate a displacement value and a speed value (e.g., a rotational speed value or a linear speed value) based on the acceleration value and the timing data received respectively from the accelerometer 31 and the timer 33. The microcontroller 2 is also configured to reference the timing data received from the timer 33 along with the first detection data, the second detection data, the displacement value and the speed value to determine time-related change values thereof, respectively.

It is worth noting that compared with the conventional way of monitoring a rotating device where a sensing element such as an accelerometer is disposed on a shaft or a bearing of the rotating device, the sensing unit 3, which integrates the accelerometer 31, the electric sensor module 32 and the timer 33 into one unit, can detect more measured values and a more subtle difference in vibration in a more accurate manner since the sensing unit 3 is disposed on the circuit board 13 and is not affected by the balance of the rotating device 1. In addition, the electric sensor module 32 can also directly obtain electric signals from the circuit board 13, reducing potential interferences to the electric signals during transmission, so as to ensure that the microcontroller 2 can receive relatively more electric signals and make relatively more accurate determinations based on the electric signals.

The microcontroller 2 is configured to execute the logic program that is pre-installed in the microcontroller 2 to compare the acceleration value, the displacement value, the speed value, the voltage value, the current value, the resistance value, the electric power value and the time-related change values (collectively referred to as "parameters" herein) respectively with a plurality of predetermined ranges, to generate the control signal according to comparison results, and to transmit the control signal to the response unit 4.

The response unit 4 is configured to, after receiving the control signal, output a driving signal to the circuit board 13 based on the control signal for the circuit board 13 to control operation of the operation module 12 accordingly. The response unit 4 may at least include a variable resistor (e.g., a digital potentiometer) and a pulse-width modulation (PWM) controller, and is configured to adjust the rotational speed of the operation module 12 by outputting the driving signal to the circuit board 13 for the circuit board 13 to adjust a rotational speed of the operation module 12 based on the driving signal. For example, when the microcontroller 2 determines that the speed value of the operation module 12 is greater than an upper value of the corresponding range, the microcontroller 2 generates and transmits the control signal to the response unit 4, and the response unit 4, in response to receiving the control signal, increases resistance of the variable resistor and outputs the driving signal by the PWM controller to the circuit board 13, such that the circuit board 13 decreases the rotational speed of the operation module 12 in response to the driving signal. In some embodiments, the response unit 4 may include a switch that is configured to switch to an off state in response to receiving the control signal, so as to make the circuit board 13 stop the operation module 12. In this way, the rotational speed of the operation module 12 may be decreased or increased or the operation of the operation module 12 may be stopped in response to the microcontroller 2 determining that any one of the parameters falls outside the corresponding range, e.g., the speed value is greater than the upper value of the corresponding range, the acceleration value or the displacement value is greater than an upper value of the corresponding range which means vibration is too high, the current value is greater than an upper value of the corresponding range, or the voltage value is lower than a lower value of the corresponding range, etc.

It should be noted that although the response unit 4 is configured to control operation of the operation module 12 through the circuit board 13 based on the control signal in real time, the microcontroller 2 may be also configured to, in response to determining that at least one of the parameters falls outside the corresponding range (e.g., the acceleration value is greater than the upper value of the corresponding range, the current value is greater than the upper value of the corresponding range, etc.), determine that the rotating device 1 is operating abnormally and control the output unit 5 to output an alarm signal. The output unit 5 may be embodied as a light-emitting diode (LED) or a speaker that can be controlled by the microcontroller 2 to output the alarm signal (e.g., a series of flashing lights, a series of loud sounds, etc.) for notifying maintenance personnel to perform maintenance of the rotating device 1.

In addition, considering that the control signal generated by the microcontroller 2 is dependent on the pre-installed logic program for performing calculations and processing, to further improve the performance of the microcontroller 2, an artificial intelligence (AI) autonomous learning mechanism may be introduced to autonomously perform inductive calculations and optimize the logic program based on each time the parameters are received and the control signal is generated, thereby improving performance of the system in monitoring the rotating device 1.

In summary, the system for monitoring a rotating device according to this disclosure can more accurately obtain the first detection data that is related to the movement of the rotating device 1 and the second detection data that is related to the electrical properties of the circuit board 13 of the rotating device 1 by virtue of the sensing unit 3 being disposed on the circuit board 13. In this way, the system of this disclosure is able to comprehensively monitor operation of the rotating device 1, and when necessary, adjust the operation of the rotating device 1 in real time by the microcontroller 2 processing the parameters received and generating and transmitting the control signal to the response unit 4 for the response unit 4 to control operation of the rotating device 1 through the circuit board 13 based on the control signal. Therefore, the object of this disclosure can indeed be achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A system for monitoring a rotating device (1), the rotating device (1) including an operation module (12), and a circuit board (13) electrically connected to the operation module (12) for driving operation of the operation module (12), comprising:
a sensing unit (3) adapted to be disposed on the circuit board (13) and including an accelerometer (31) configured to generate first detection data related to movement of the circuit board (13), and an electric sensor module (32) configured to generate second detection data related to electrical properties of the circuit board (13);
a microcontroller (2) electrically connected to said accelerometer (31) and said electric sensor module (32) to receive the first detection data and the second detection data therefrom, and configured to generate a control signal based on the first detection data and the second detection data; and
a response unit (4) electrically connected to said microcontroller (2) to receive the control signal therefrom, adapted to be electrically connected to the circuit board (13), and configured to control operation of the operation module (12) through the circuit board (13) based on the control signal.

2. The system claimed in claim 1, wherein the first detection data generated by said accelerometer (31) of said sensing unit (3) includes an acceleration value.

3. The system as claimed in claim 2, wherein said sensing unit (3) further includes a timer (33) electrically connected to said microcontroller (2) and configured to measure time and transmit timing data to said microcontroller (2), and said microcontroller (2) is further configured to calculate a displacement value and a speed value based on the acceleration value and the timing data and to generate the control signal further based on the displacement value and the speed value.

4. The system as claimed in claim 3, wherein the second detection data generated by said electric sensor module (32) of said sensing unit (3) includes a voltage value, a current value, a resistance value and an electric power value.

5. The system as claimed in claim 4, wherein said microcontroller (2) is configured to compare the acceleration value, the displacement value, the speed value, the voltage value, the current value, the resistance value and the electric power value respectively with a plurality of ranges, and to generate the control signal according to comparison results.

6. The system as claimed in claim 5, wherein said microcontroller (2) is further configured to, in response to determining that at least one of the acceleration value, the displacement value, the speed value, the voltage value, the current value, the resistance value and the electric power value falls outside a range, determine that the rotating device (1) is operating abnormally.

7. The system as claimed in claim 6, further comprising an output unit (5) electrically connected to said microcontroller (2),
wherein said microcontroller (2) is further configured to, in response to determining that the rotating device (1) is operating abnormally, control said output unit (5) to output an alarm signal.

8. The system as claimed in any one of claims 1 to 7, wherein said response unit (4) is a variable resistor, and is configured to adjust a resistance value thereof based on the control signal, so as to output a driving signal to the circuit board (13) for the circuit board (13) to adjust a rotational speed of the operation module (12) based on the driving signal.

9. The system as claimed in any one of claims 1 to 7, wherein said response unit (4) is a switch, and is configured to switch to an off state in response to receipt of the control signal, so as to make the circuit board (13) stop the operation module (12).

10. The system as claimed in any one of claims 1 to 9, wherein the second detection data generated by said electric sensor module (32) of said sensing unit (3) includes a voltage value, a current value, a resistance value and an electric power value.

## Patentansprüche

1. Ein System zum Überwachen einer Drehvorrichtung (1), wobei die Drehvorrichtung (1) ein Betriebsmodul (12) und eine Schaltungsplatine (13) umfasst, die elektrisch mit dem Betriebsmodul (12) verbunden ist, zum Antreiben des Betriebs des Betriebsmoduls (12), wobei das System folgende Merkmale aufweist:
eine Erfassungseinheit (3), die dazu angepasst ist, auf der Schaltungsplatine (13) angeordnet zu sein, und einen Beschleunigungsmesser (31), der dazu konfiguriert ist, erste Erfassungsdaten zu erzeugen, die sich auf eine Bewegung der Schaltungsplatine (13) beziehen, und ein elektrisches Sensormodul (32) umfasst, das dazu konfiguriert ist, zweite Erfassungsdaten zu erzeugen, die sich auf elektrische Eigenschaften der Schaltungsplatine (13) beziehen;
einen Mikrocontroller (2), der mit dem Beschleunigungsmesser (31) und dem elektrischen Sensormodul (32) elektrisch verbunden ist, um die ersten Erfassungsdaten und die zweiten Erfassungsdaten von denselben zu empfangen, und der dazu konfiguriert ist, basierend auf den ersten Erfassungsdaten und den zweiten Erfassungsdaten ein Steuersignal zu erzeugen; und
eine Ansprecheinheit (4), die mit dem Mikrocontroller (2) elektrisch verbunden ist, um das Steuersignal von demselben zu empfangen, dazu angepasst ist, mit der Schaltungsplatine (13) elektrisch verbunden zu sein, und dazu konfiguriert ist, den Betrieb des Betriebsmoduls (12) durch die Schaltungsplatine (13) basierend auf dem Steuersignal zu steuern.

2. Das System gemäß Anspruch 1, wobei die ersten Erfassungsdaten, die durch den Beschleunigungsmesser (31) der Erfassungseinheit (3) erzeugt werden, einen Beschleunigungswert umfassen.

3. Das System gemäß Anspruch 2, wobei die Erfassungseinheit (3) ferner einen Zeitgeber (33) umfasst, der mit dem Mikrocontroller (2) elektrisch verbunden ist und dazu konfiguriert ist, Zeit zu messen und Zeitgebungsdaten an den Mikrocontroller (2) zu übertragen, und der Mikrocontroller (2) ferner dazu konfiguriert ist, basierend auf dem Beschleunigungswert und den Zeitgebungsdaten einen Verschiebungswert und einen Geschwindigkeitswert zu berechnen und das Steuersignal ferner basierend auf dem Verschiebungswert und dem Geschwindigkeitswert zu erzeugen.

4. Das System gemäß Anspruch 3, wobei die zweiten Erfassungsdaten, die durch das elektrische Sensormodul (32) der Erfassungseinheit (3) erzeugt werden, einen Spannungswert, einen Stromwert, einen Widerstandswert und einen elektrischen Leistungswert umfassen.

5. Das System gemäß Anspruch 4, wobei der Mikrocontroller (2) dazu konfiguriert ist, den Beschleunigungswert, den Verschiebungswert, den Geschwindigkeitswert, den Spannungswert, den Stromwert, den Widerstandswert und den elektrischen Leistungswert jeweils mit einer Mehrzahl von Bereichen zu vergleichen und das Steuersignal gemäß Vergleichsergebnissen zu erzeugen.

6. Das System gemäß Anspruch 5, wobei der Mikrocontroller (2) ferner dazu konfiguriert ist, ansprechend auf das Bestimmen, dass zumindest einer von dem Beschleunigungswert, dem Verschiebungswert, dem Geschwindigkeitswert, dem Spannungswert, dem Stromwert, dem Widerstandswert und dem elektrischen Leistungswert außerhalb eines Bereichs liegt, zu bestimmen, dass die Drehvorrichtung (1) anormal arbeitet.

7. Das System gemäß Anspruch 6, das ferner eine Ausgabeeinheit (5) aufweist, die mit dem Mikrocontroller (2) elektrisch verbunden ist,
wobei der Mikrocontroller (2) ferner dazu konfiguriert ist, ansprechend auf das Bestimmen, dass die Drehvorrichtung (1) anormal arbeitet, die Ausgabeeinheit (5) zu steuern, um ein Alarmsignal auszugeben.

8. Das System gemäß einem der Ansprüche 1 bis 7, wobei die Ansprecheinheit (4) ein variabler Widerstand ist und dazu konfiguriert ist, einen Widerstandswert derselben basierend auf dem Steuersignal einzustellen, um ein Antriebssignal an die Schaltungsplatine (13) auszugeben, damit die Schaltungsplatine (13) eine Drehgeschwindigkeit des Betriebsmoduls (12) basierend auf dem Antriebssignal einstellt.

9. Das System gemäß einem der Ansprüche 1 bis 7, wobei die Ansprecheinheit (4) ein Schalter ist und dazu konfiguriert ist, ansprechend auf den Empfang des Steuersignals in einen Aus-Zustand zu schalten, um die Schaltungsplatine (13) zu veranlassen, das Betriebsmodul (12) anzuhalten.

10. Das System gemäß einem der Ansprüche 1 bis 9, wobei die zweiten Erfassungsdaten, die durch das elektrische Sensormodul (32) der Erfassungseinheit (3) erzeugt werden, einen Spannungswert, einen Stromwert, einen Widerstandswert und einen elektrischen Leistungswert umfassen.

## Revendications

1. Système de surveillance d'un dispositif rotatif (1), le dispositif rotatif (1) incluant un module de fonctionnement (12) et une carte de circuit imprimé (13) connectée électriquement au module de fonctionnement (12) pour commander le fonctionnement du module de fonctionnement (12), comprenant :
une unité de détection (3) adaptée pour être disposée sur la carte de circuit imprimé (13) et incluant un accéléromètre (31) configuré pour générer des premières données de détection associées au mouvement de la carte de circuit imprimé (13), et un module de capteur électrique (32) configuré pour générer des deuxièmes données de détection relatives aux propriétés électriques de la carte de circuit imprimé (13) ;
un microcontrôleur (2) connecté électriquement audit accéléromètre (31) et audit module de capteur électrique (32) pour recevoir les premières données de détection et les deuxièmes données de détection de celui-ci, et configuré pour générer un signal de commande sur la base des premières données de détection et des deuxièmes données de détection ; et
une unité de réponse (4) connectée électriquement audit microcontrôleur (2) pour recevoir le signal de commande de celui-ci, adaptée pour être connectée électriquement à la carte de circuit imprimé (13), et configurée pour commander le fonctionnement du module de fonctionnement (12) par l'intermédiaire de la carte de circuit imprimé (13) sur la base du signal de commande.

2. Système selon la revendication 1, dans lequel les premières données de détection générées par ledit accéléromètre (31) de ladite unité de détection (3) incluent une valeur d'accélération.

3. Système selon la revendication 2, dans lequel ladite unité de détection (3) inclut en outre un minuteur (33) connecté électriquement audit microcontrôleur (2) et configuré pour mesurer le temps et transmettre des données de synchronisation audit microcontrôleur (2), et ledit microcontrôleur (2) est en outre configuré pour calculer une valeur de déplacement et une valeur de vitesse sur la base de la valeur d'accélération et des données de synchronisation, et pour générer le signal de commande sur la base, en outre, de la valeur de déplacement et de la valeur de vitesse.

4. Système selon la revendication 3, dans lequel les deuxièmes données de détection générées par ledit module de capteur électrique (32) de ladite unité de détection (3) incluent une valeur de tension, une valeur de courant, une valeur de résistance et une valeur d'énergie électrique.

5. Système selon la revendication 4, dans lequel ledit microcontrôleur (2) est configuré pour comparer respectivement la valeur d'accélération, la valeur de déplacement, la valeur de vitesse, la valeur de tension, la valeur de courant, la valeur de résistance et la valeur de puissance électrique à une pluralité de plages, et pour générer le signal de commande selon les résultats de ces comparaisons.

6. Système selon la revendication 5, dans lequel ledit microcontrôleur (2) est en outre configuré pour, en réponse à la détermination qu'au moins l'une de la valeur d'accélération, de la valeur de déplacement, de la valeur de vitesse, de la valeur de tension, de la valeur de courant, de la valeur de résistance et de la valeur de puissance électrique se situent en dehors d'une plage, déterminer que le dispositif rotatif (1) fonctionne anormalement.

7. Système selon la revendication 6, comprenant en outre une unité de sortie (5) connectée électriquement audit microcontrôleur (2),
dans lequel ledit microcontrôleur (2) est en outre configuré pour, en réponse à la détermination d'un fonctionnement anormal du dispositif rotatif (1), commander ladite unité de sortie (5) pour émette un signal d'alarme.

8. Système selon l'une quelconque des revendications 1 à 7, dans lequel ladite unité de réponse (4) est une résistance variable, et est configurée pour ajuster une valeur de résistance de celle-ci sur la base du signal de commande, de façon à délivrer un signal de fonctionnement à la carte de circuit imprimé (13) pour que la carte de circuit imprimé (13) ajuste une vitesse de rotation du module d'actionnement (12) sur la base du signal de fonctionnement.

9. Système selon l'une quelconque des revendications 1 à 7, dans lequel ladite unité de réponse (4) est un commutateur, et est configuré pour commuter vers un état d'arrêt en réponse à la réception du signal de commande, de façon à amener la carte de circuit imprimé (13) à arrêter le module de fonctionnement (12).

10. Système selon l'une quelconque des revendications 1 à 9, dans lequel les deuxièmes données de détection générées par ledit module de capteur électrique (32) de ladite unité de détection (3) incluent une valeur de tension, une valeur de courant, une valeur de résistance et une valeur d'énergie électrique.
